Europäisches Patentamt

European Patent Office

Office européen des brevets

(19)

(11) Veröffentlichungsnummer: **0 147 531**
**B1**

(12) **EUROPÄISCHE PATENTSCHRIFT**

(45) Veröffentlichungstag der Patentschrift:
**28.10.87**

(51) Int. Cl.⁴: **B 25 B 5/02**, B 23 H 11/00

(21) Anmeldenummer: **84110601.6**

(22) Anmeldetag: **06.09.84**

(54) Vorrichtung zum Einspannen von Werkstücken.

(30) Priorität: **29.12.83 DE 3347403**

(43) Veröffentlichungstag der Anmeldung:
**10.07.85 Patentblatt 85/28**

(45) Bekanntmachung des Hinweises auf die Patenterteilung:
**28.10.87 Patentblatt 87/44**

(84) Benannte Vertragsstaaten:
**AT BE CH DE FR GB IT LI LU NL SE**

(56) Entgegenhaltungen:
**DE - A - 2 703 332**
**FR - A - 514 448**
**GB - A - 1 006 056**
**US - A - 2 364 150**
**US - A - 3 358 990**

(73) Patentinhaber: **Erowa AG, Winkelstrasse 8,
CH-5734 Reinach (CH)**

(72) Erfinder: **Schneider, Rudolf, Gondiswinkel,
CH-5734 Reinach (CH)**

(74) Vertreter: **Rottmann, Maximilian R., c/o Rottmann +
Quehl AG Glattalstrasse 37, CH-8052 Zürich (CH)**

### Beschreibung

Die vorliegende Erfindung bezieht sich auf eine Vorrichtung zum Einspannen von Werkstücken, bei denen zumindest ein Schaftabschnitt runde oder prismatische Gestalt besitzt, insbesondere zum Einspannen von Elektrodenkörper-Rohlingen für elektroerosive Bearbeitungsmaschinen.

Elektrodenkörper für elektroerosive Bearbeitungsmaschinen sind Werkzeuge, die mit ausserordentlich hoher Genauigkeit in die Bearbeitungsmaschine eingespannt werden müssen, nicht nur in bezug auf Zentrizität, sondern auch in bezug auf Verdrehung gegenüber ihrer Mittelachse. Solche Elektroden werden aus Rohlingen, z. B. aus prismatischen, quadratischen oder runden Kupferstäben durch Drehen und/oder Fräsen und/oder Schleifen hergestellt, wobei der Rohling während dieses Formbearbeitungsvorganges in der Dreh-, Fräs- und Schleifmaschine eingespannt werden muss. Durch die Bearbeitung des Rohlings wird eine theoretische Mittelachse im Werkzeug definiert, nach der sich der elektroerosive Bearbeitungsvorgang orientiert.

Nachdem der Rohling einmal eingespannt und zu einem Elektrodenkörper geformt worden ist, liegt diese theoretische Mittelachse mit Bezug auf die Einspannvorrichtung fest, und es ist an sich wünschenswert, den Elektrodenkörper nicht mehr aus der Spannvorrichtung entfernen zu müssen. Jedes neuerliche Einspannen, auch wenn die Spannvorrichtung noch so präzise gearbeitet ist, bringt eine mehr oder weniger ausgeprägte Verschiebung dieser theoretischen Mittelachse gegenüber der Achse der Spannvorrichtung mit sich, was bei der hohen, in elektroerosiven Bearbeitungsprozessen geforderten Präzision natürlich höchst unerwünscht ist.

Geeignete Kupplungsvorrichtungen zum Einspannen von Elektrodenkörpern in elektroerosiven Bearbeitungsmaschinen sind bekannt, welche eine hochpräzise zentrische Anordnung mit genauer Einhaltung einer erwünschten Sollwinkellage der Werkzeuge an den Erodiermaschinen gestatten. In vielen Fällen ist es jedoch nicht möglich, den Elektrodenrohling direkt an einem Kupplungsorgan einer solchen Vorrichtung anzubringen, so dass eine dazwischengeschaltete Spannvorrichtung erforderlich ist. An eine solche Spannvorrichtung ist neben der erforderlichen Stabilität und Präzision auch die Anforderung zu stellen, dass sie möglichst preisgünstig sein soll, da Elektroden für elektroerosive Bearbeitungseinrichtungen manchmal zu Hunderten auf Lager gehalten werden müssen.

Aus der FR-PS 514448 ist eine Stütz- und Einspannvorrichtung für zu bearbeitende Werkstücke bekannt, die ein im wesentlichen zylindrisches, mit einer V-förmigen Nut versehenes, von einem planen, mit Befestigungsbohrungen versehenen Flansch getragenes Stützorgan umfasst, welches ein im wesentlichen ringförmiges, mit einer Klemmschraube versehenes Spannglied aufweist. Letzteres kann in drei verschiedenen Positionen auf das Stützorgan aufgeschoben werden, je nach Art und Ausführung des vom Stützorgan aufzunehmenden Werkstückes. Diese Vorrichtung ist vergleichsweise kompliziert und daher teuer in der Herstellung, wenn auch nur bescheidene Ansprüche in bezug auf die Präzision der Einspannung erfüllt werden sollen; ferner ist die von dieser Vorrichtung gebotene Stabilität infolge des langgestreckten, nur an einer vergleichsweise kleinen Stirnfläche am Befestigungsflansch verankerten Stützorganes bei weitem ungenügend, wenn höchste Anforderungen an die Bearbeitungspräzision, wie z. B. bei Elektroden für Erosionsmaschinen, gestellt werden müssen.

Es sind wohl andere Spannvorrichtungen für prismatische oder runde Körper bekannt, die die an sie gestellten Anforderungen hinsichtlich Präzision und Stabilität zu erfüllen vermögen, die andererseits aber unverhältnismässig teuer sind und somit für den vorgesehenen Zweck nicht in Frage kommen können, da eine Lagerhaltung von mehreren hundert in solche Spannvorrichtungen eingespannten Elektroden eine zu kostspielige Angelegenheit wäre. Die Lagerung nur der Elektroden selber, in uneingespanntem Zustand, ist jedoch meistens nicht möglich, da durch das Entfernen der Elektrode aus der Spannvorrichtung und das neuerliche Einspannen derselben die erforderliche Präzision bezüglich genauester Lage meist nicht erfüllt werden kann.

Es ist deshalb eine Aufgabe der vorliegenden Erfindung, eine Spannvorrichtung der eingangs erwähnten und im Oberbegriff des Anspruches 1 näher umschriebenen Art zu schaffen, die nicht nur die wünschenswerten Eigenschaften hinsichtlich Stabilität und Genauigkeit der Einspannung zu erfüllen vermag, sondern zudem sehr günstig in der Herstellung ist und somit ein preiswertes Teil darstellt, das auch in grossen Mengen auf Lager gehalten werden kann, ohne dass grosses Kapital investiert werden muss. Dadurch entfällt das Aus- und neuerliche Einspannen der Elektroden, so dass eine auch höchsten Ansprüchen genügende Präzision gewährleistet ist.

Eine weitere Aufgabe der Erfindung ist in der Schaffung einer Spannvorrichtung der vorerwähnten Art zu erblicken, die universell für runde oder prismatische Werkstücke bzw. solche mit einem runden oder prismatischen Schaftbereich zu schaffen, welche für verschiedene Werkstück- bzw. Schaftgrössen verwendbar ist und dabei ein müheloses, schnelles Einspannen des Werkstückes ermöglicht.

Bei einer Spannvorrichtung der eingangs erwähnten Art werden diese Erfindungsaufgaben mit den im kennzeichnenden Teil des Patentanspruches 1 aufgeführten Merkmalen gelöst. Weiterbildungen und besondere Ausführungsarten der erfindungsgemässen Spannvorrichtung sind in den abhängigen Ansprüchen 2 bis 7 definiert.

Im folgenden wird ein Ausführungsbeispiel des Erfindungsgegenstandes, unter Bezugnahme auf die beiliegenden Zeichnungen, näher erläutert. Es zeigen:

Fig. 1 eine schaubildliche Darstellung einer Spannvorrichtung mit eingespanntem, prismatischem Werkstückrohling,

Fig. 2 eine Ansicht der leeren Spannvorrichtung von der Einspannseite her,

Fig. 3 einen Querschnitt durch den Spannkörper mit eingespanntem Werkstück,

Fig. 4 eine teilweise geschnittene Seitenansicht eines leeren Spannkörpers, und

Fig. 5 eine Ansicht verschiedener Einlageplättchen.

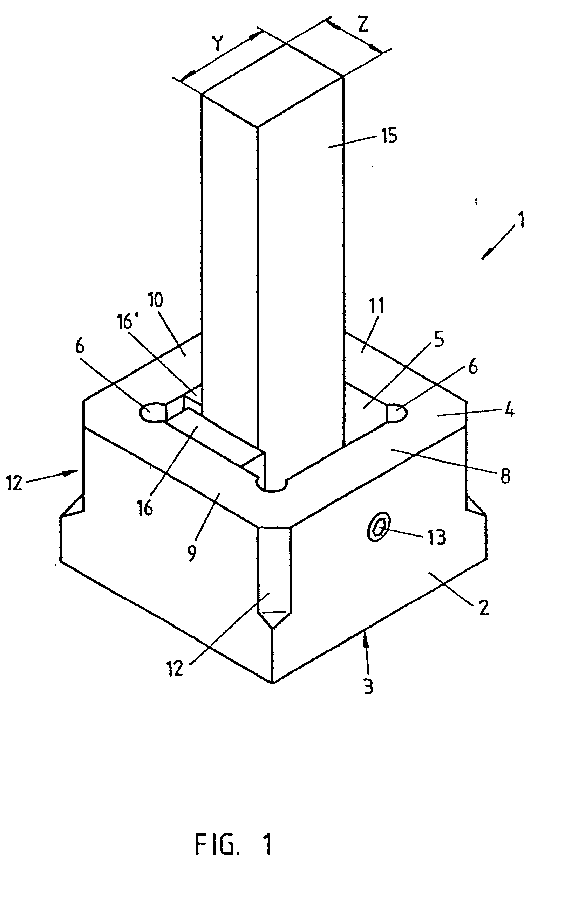

Die generell mit 1 bezeichnete Spannvorrichtung umfasst als Spannkörper einen Spannblock 2, der im wesentlichen kubische Gestalt besitzt und vorzugsweise aus Stahl gefertigt ist. Die in Fig. 1 unter Fläche 3 des Spannblocks 2 ist exakt plan bearbeitet und mit Mitteln zur Befestigung an einer Kupplungsvorrichtung, an einer Bearbeitungsmaschine oder dgl. versehen; diese Mittel werden im folgenden noch näher erläutert werden. In der der unteren Fläche 3 gegenüberliegenden Oberfläche 4 des Spannblockes 2 ist eine Spannkammer 5 eingelassen, die im wesentlichen quadratischen Querschnitt besitzt, wobei die Ecken mit abgerundeten Ausnehmungen 6 versehen sind. Die Tiefe der Kammer 5 ist etwas geringer als die Höhe des Spannblocks 2, so dass die Kammer 5 durch einen einstückig mit dem Spannkörper 2 ausgebildeten Boden 7 abgeschlossen ist.

Die Spannkammer 5 ist somit durch vier Wände 8, 9, 10 und 11 begrenzt, welche, zusammen mit dem Boden 5, den eigentlichen Spannkörper bilden. Im vorliegenden Beispiel ist die Aussenkontur des Spannblockes 2 von quadratischem Querschnitt, doch kann genauso ein rechteckiger oder runder Querschnitt gewählt werden. Die Seitenkanten des Spannblockes 2 sind mit Abschrägungen 12 versehen, die sich über einen Teil der Höhe desselben, der Oberfläche 4 zugewandt, erstrecken.

Zwei aneinander angrenzende Wände des Spannblockes 2, im vorliegenden Beispiel die Wände 8 und 11, sind mit je einer Klemmschraube 13 bzw. 14 versehen, die in einer durchgehenden Gewindebohrung der jeweiligen Wand Aufnahme findet. Diese Klemmschrauben dienen zur Einspannung eines Werkstückes, das im Beispiel gemäss Fig. 1 die Gestalt eines länglichen Stabes 15 mit rechteckigem Querschnitt hat. Es kann sich dabei um einen Kupferstab handeln, wie er als Rohling zur Herstellung einer Erosionselektrode bei Erodiermaschinen Verwendung findet. Der Querschnitt des Stabes 15 ist in allen Dimensionen geringer als der Querschnitt der Spannkammer 5. Zum zumindest annähernd zentrischen Einspannen des Stabes 15 dient ein Paar von Einlageplättchen 16 und 16', deren Ausgestaltung im folgenden noch näher erläutert werden wird.

Wesentlich ist, dass der Stab 15 nach Festziehen der Klemmschrauben 13 und 14 gegen die Plättchen 16 und 16' und damit gegen die Innenseite der gegenüberliegenden Wand 9 bzw. 10 gepresst wird. Die Anforderungen, die hinsichtlich Planheit und Winkellage an die Innenflächen der Wände 8 bis 11 gestellt werden müssen, sind nicht sonderlich hoch; wichtig ist nur, dass das Werkstück, z. B. der Stab 15, unverrückbar und einigermassen zentrisch in der Spannkammer 5 festgehalten ist.

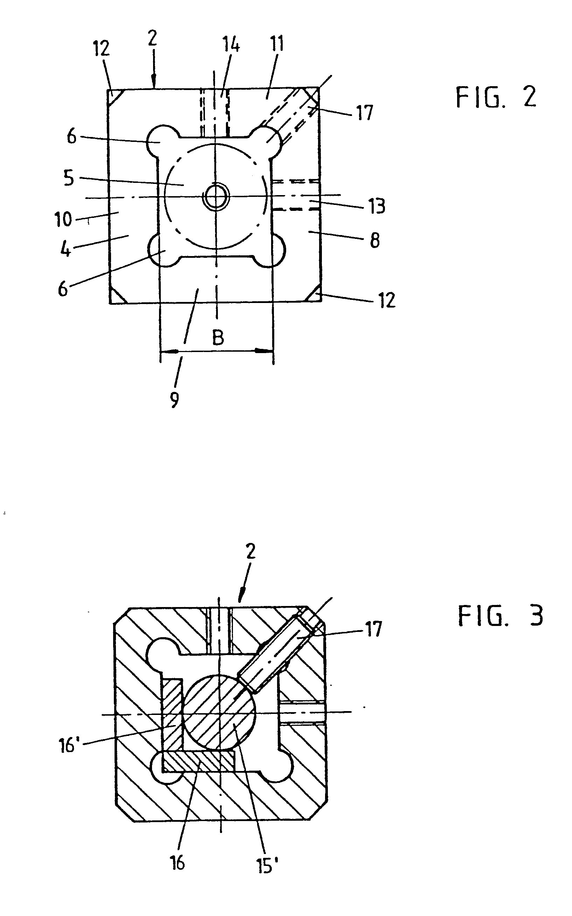

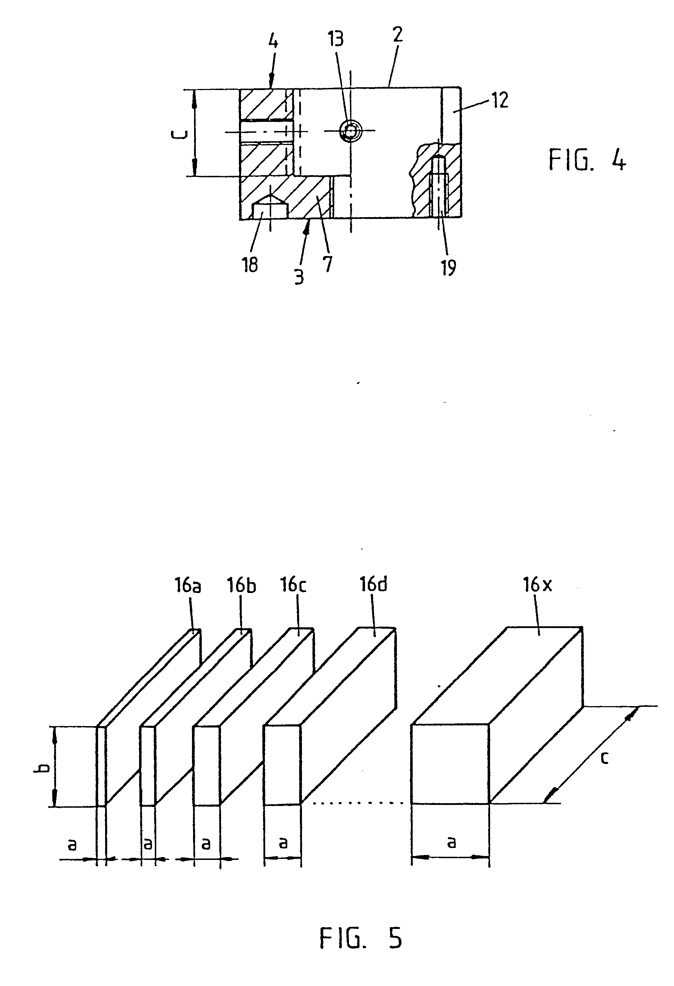

Wie aus der Fig. 5 zu ersehen ist, umfasst die Spannvorrichtung einen Satz mit einer Mehrzahl von Einlageplättchen 16a ... 16x, deren Höhe c in etwa der Tiefe C (Fig. 4) der Spannkammer 5 entspricht. Die Breite b der Plättchen 16a ... 16x ist so bemessen, dass sie etwas mehr als der Hälfte der Kantenlänge B (Fig. 2) des Spannkammerquerschnittes entspricht. Damit ist sichergestellt, wie es auch aus Fig. 3 ersichtlich ist, dass jedes Einlageplättchen 16a ... 16x, egal wie es in die Spannkammer 5 eingesetzt ist, stets die Mitte der zugeordneten Seitenwand 8 bis 11 überdeckt.

Die Dicke a der einzelnen Plättchen ist unterschiedlich; die Abstufung zwischen den einzelnen Plättchen 16 kann dabei 0.5 bzw. 1 mm betragen. Im vorliegenden Beispiel beträgt die Dicke des Plättchens 16a 0.5 mm, diejenige des Plättchens 16b 1 mm, diejenige des Plättchens 16c 2 mm und diejenige der jeweils folgenden Plättchen 16d ... 16x jeweils 1 mm mehr. Mit Vorteil umfasst dieser Satz von Einlageplättchen jeweils mehrere Plättchen 16 gleicher Dicke, zumindest aber je zwei Plättchen 16a ... 16x gleicher Dicke. Das Plättchen 16x kann dabei eine Dicke besitzen, die etwas geringer als die Hälfte der lichten Weite zwischen zwei gegenüberliegenden Wänden 8 und 10 bzw. 9 und 11 ist, um auch Werkstücke mit sehr dünnen Abmessungen einspannen zu können. Eine andere Möglichkeit besteht natürlich darin, mehrere aufeinandergeschichtete Plättchen 16 pro Seite zu kombinieren, um die gewünschte Gesamtdicke zu erreichen.

Beim Einspannen eines Werkstückes 15 mit rechteckigem Querschnitt wird wie folgt vorgegangen: Die lichte Weite B (Fig. 2) zwischen gegenüberliegenden Wänden 8 und 10 bzw. 9 und 11 der Kammer 5 ist bekannt; die beiden Querschnittabmessungen y und z des Werkstückes 15 können gemessen werden. Als Plättchen 16 (Fig. 1) wird nun eines aus dem Satz ausgewählt, dessen Dickenmass der Hälfte der Differenz zwischen dem Mass B und dem Mass y entspricht. Entsprechenderweise wird als Plättchen 16' ein solches aus dem Satz ausgewählt, dessen Dickenmass der Hälfte der Differenz zwischen dem Mass B und dem Mass z entspricht. Damit liegt das Zentrum des Stabes 15 zumindest annähernd im Zentrum der Spannkammer 5 und damit des Spannblockes 2. Falls hohe Anforderungen an die Zentrizität der Einspannung des Werkstückes gestellt werden müssen, können zusätzliche Einlageplättchen vorgesehen werden, deren Dicke im Bereich von 1/100 bis 1/10 mm liegt und die zusätzlich zu den gröber abgestuften Plättchen 16a ... 16x in die Spannkammer 5 eingelegt werden können. Im allgemeinen spielt es jedoch keine allzu grosse Rolle, ob das Werkstück nun ganz genau im Zentrum der Spannvorrichtung liegt, da ja anschliessend erst die Bearbeitung des Rohlings und damit das Festlegen der theoretischen, präzisen Mittelachse erfolgt.

Wichtig ist nur, dass das einmal eingespannte Werkstück 15 unverrückbar und zuverlässig in der Spannvorrichtung verbleibt, einesteils während dessen Bearbeitung und anderenteils während dessen Lagerung. Dies ist im vorliegenden Fall durch die robuste, einfache Konstruktion des Spannblockes 2 gewährleistet.

Aus der Fig. 3 ist ersichtlich, wie ein rundes Werkstück 15a eingespannt ist. Zu diesem Zweck ist eine zusätzliche Klemmschraube 17 vorgesehen, die im Bereich einer Ecke der Spannkammer 5 angeordnet ist, vorzugsweise in derjenigen Ecke, die von den mit den Klemmschrauben 13 und 14 versehenen Wänden 8 und 11 eingeschlossen ist. Im übrigen ist der Aufbau und das Vorgehen beim Einspannen genau entsprechend, wobei logischerweise zwei Plättchen 16 und 16' mit gleicher Dicke Verwendung finden. Die zuvor erwähnten Abschrägungen 12 erleichtern dabei das Anbringen der zusätzlichen, im wesentlichen diagonal zum Querschnitt der Spannkammer 5 verlaufenden Klemmschraube 17.

Aus der Darstellung in Fig. 4 geht hervor, dass die untere Fläche 3 des Spannblockes 2 mit Vertiefungen 18 und Gewindebohrungen 19 versehen ist. Diese dienen dazu, nicht näher dargestellte Mittel zum Befestigen und Zentrieren des Spannblockes 2 an einer Bearbeitungsmaschine aufzunehmen.

Mit der erfindungsgemäss vorgeschlagenen Spannvorrichtung ist ein einfaches, präzises und robustes Mittel geschaffen, insbesondere Erodierelektroden bzw. die Rohlinge zur Herstellung derselben schnell und zuverlässig einzuspannen. Im allgemeinen kann die Abmessung der Spannkammer 5 so gewählt werden, dass nahezu sämtliche Elektrodengrössen aufgenommen werden können; dies vereinfacht und verbilligt natürlich die Herstellung und die Lagerhaltung, da nur ein einziger Typ von Spannblöcken 2 für die unterschiedlichsten Elektroden erforderlich ist. Bei den Einlageplättchen handelt es sich um einfache Bauteile, die preisgünstig mit der erforderlichen Präzision hergestellt und somit in grosser Auswahl vorrätig gehalten werden können.

Beim Spannblock 2 muss nur eine einzige Oberfläche, nämlich die Fläche 3, mit grosser Präzision bearbeitet, z.B. plangeschliffen werden, da die Befestigung der Spannvorrichtung 1 nur vermittels dieser Seite bzw. der daran angebrachten Mittel erfolgen wird. Die fertig bearbeitete Elektrode bleibt immer in der Spannvorrichtung 1 eingespannt, auch wenn sie an Lager gelegt wird. Dies ist ohne grossen Kapitalaufwand möglich, da die Spannvorrichtung ein billiges Bauteil darstellt, wobei durch den Wegfall des sonst erforderlichen Aus- und neuerlichen Einspannens der Elektrode die geforderte hohe Präzision in der Elektrodenanordnung gewährleistet ist.

Durch die geschlossene Konstruktion des Spannblockes 2, der vorzugsweise aus Automatenstahl gefertigt ist, ergibt sich eine hohe Festigkeit der Spannvorrichtung, so dass die Werkstücke sicher und unverrückbar durch festes Anziehen der Klemmschrauben 13 und 14 bzw. 17 verankert werden.

## Patentansprüche

1. Vorrichtung zum Einspannen von Werkstücken, bei denen zumindest ein Schaftabschnitt runde oder prismatische Gestalt besitzt, insbesondere von Elektrodenkörper-Rohlingen für elektroerosive Bearbeitungsmaschinen, welche Vorrichtung einen Spannkörper aufweist, der eine plan ausgebildete, zur Anlage an ein Aufnahmeglied einer Bearbeitungsmaschine vorgesehene Oberfläche (3) besitzt, dadurch gekennzeichnet, dass der Spannkörper durch einen im wesentlichen kubischen Spannblock (2) gebildet ist, in dessen der plan ausgebildeten Oberfläche (3) gegenüberliegenden Oberfläche (4) ein mittig angeordnete Spannkammer (5) mit zumindest annähernd quadratischem Querschnitt eingelassen ist, wobei mindestens in zwei aneinander angrenzenden Wänden (8, 11) der Spannkammer (5) diese Wände durchdringende Klemmschrauben (13, 14) vorgesehen sind, und dass die Vorrichtung ferner ein Satz von plattenartigen Unterlagekörpern (16) unterschiedlicher Dicke umfasst, die in die Spannkammer (5) einzulegen bestimmt sind.

2. Spannvorrichtung nach Anspruch 1, dadurch gekennzeichnet, dass die Ecken der Spannkammer (5) mit Ausnehmungen (6) zylindrischer Gestalt versehen sind.

3. Spannvorrichtung nach einem der Ansprüche 1 oder 2, dadurch gekennzeichnet, dass in der von den beiden mit Klemmschrauben (13, 14) versehenen Wänden (8, 11) eingeschlossenen Ecke eine weitere, im wesentlichen diagonal zur Spannkammer (5) verlaufende, in diese hineinragende Klemmschraube (17) vorgesehen ist.

4. Spannvorrichtung nach einem der vorangehenden Ansprüche, dadurch gekennzeichnet, dass der Satz von plattenartigen Unterlagekörpern eine Mehrzahl von Einlageplättchen (16a... 16x) umfasst, deren Dicke (b) sich um jeweils 0.5 bzw. 1 mm unterscheidet.

5. Spannvorrichtung nach Anspruch 4, dadurch gekennzeichnet, dass ferner eine Mehrzahl von zusätzlichen Einlageplättchen (16) mit einer Dicke im Bereich von 1/100 bis 1/10 mm vorgesehen ist.

6. Spannvorrichtung nach Anspruch 4 oder 5, dadurch gekennzeichnet, dass die Länge (c) der Einlageplättchen (16a... 16x) der Tiefe (C) der in den Spannkörper (2) eingelassenen Spannkammer (5) entspricht.

7. Spannvorrichtung nach einem der Ansprüche 4 bis 6, dadurch gekennzeichnet, dass die Breite (a) der Einlageplättchen (16a... 16x) grösser ist als die halbe Wandbreite (B) der Spannkammer (5).

## Claims

1. Device for the clamping of workpieces, in which at least a shaft portion has a round or prismatic shape, particularly for the clamping of electrode body blanks for an electroerosive machining apparatus, said device having a clamping body incorporating a plainly machined surface (3) adapted to rest on a receiving member of a machining apparatus, characterized in that the clamping body is constituted by an essentially hexaedral clamping block (2), the surface (4) thereof which is opposite to said essentially plainly machined surface (3) having a centrally recessed clamping chamber (5) with at least approximately square cross section, whereby clamping screws (13, 14) are provided in at least two adjacent walls (8, 11) of the clamping chamber (5) which penetrate these walls, and that the device further includes a set of plate-like spacer bodies (16) of different thickness which are adapted to be inserted into the clamping chamber (5).

2. Clamping device according to claim 1, characterized in that the corners of the clamping chamber (5) are provided with recesses of cylindric shape.

3. Clamping device according to one of the claims 1 or 2, characterized in that a further clamping screw (17) is provided in that corner enclosed by the two walls (8, 11) which are equipped with clamping screws (13, 14), said further clamping screw (17) extending diagonally to the clamping chamber (5) and projecting thereinto.

4. Clamping device according to one of the preceding claims, characterized in that the set of plate-like spacer bodies includes a plurality of insert plates (16a ... 16x), the thickness (b) thereof differing from each other by 0.5 and 1.0 mm, respectively.

5. Clamping device according to claim 4, characterized in that further a plurality of additional insert plates (16) is provided which have a thickness in the region of 1/100 to 1/10 mm.

6. Clamping device according to claim 4 or 5, characterized in that length (c) of the insert plates (16a ... 16x) corresponds to the depth of the clamping chamber (5) recessed in the clamping body (2).

7. Clamping device according to one of the claims 4 to 6, characterized in that width (a) of the insert plates (16a ... 16x) is greater than half of the width of the walls (B) of the clamping chamber (5).

**Revendications**

1. Dispositif de serrage de pièces dont au moins une partie ou queue est cylindrique ou prismatique, en particulier d'ébauches de corps d'électrodes pour machines d'usinage par électro-érosion, ledit dispositif comprenant un corps de serrage ayant une face plane (3) prévue pour s'appuyer sur un élément récepteur d'une machine d'usinage, caractérisé en ce que le corps de serrage est formé d'un bloc de serrage (2), dans l'ensemble cubique, dans la face (4) opposée à la face plane (3) duquel est creusée au milieu une chambre de serrage (5) de section au moins approximativement carrée, au moins dans deux parois adjacentes (8, 11) de cette chambre de serrage (5) étant prévues des vis de serrage (13, 14) qui traversent ces parois, et en ce que le dispositif comprend en outre un jeu de corps de calage analogues à des plaques (16) de différentes épaisseurs destinés à être placés dans la chambre de serrage (5).

2. Dispositif de serrage selon la revendication 1, caractérisé en ce que les coins de la chambre de serrage (5) sont pourvus d'évidements (6) de forme cylindrique.

3. Dispositif de serrage selon l'une des revendications 1 et 2, caractérisé en ce que dans le coin situé à la jonction des deux parois (8, 11) pourvues de vis de serrage (13, 14) est prévue une autre vis de serrage (17) qui s'étend sensiblement en diagonale relativement à la chambre de serrage (5) et entre dans celle-ci.

4. Dispositif de serrage selon l'une des revendications précédentes, caractérisé en ce que le jeu de corps de calage analogues à des plaques comprend une série de plaquettes intercalaires (16a ... 16x) dont les épaisseurs (a) diffèrent de 0,5 ou 1,0 mm.

5. Dispositif de serrage selon la revendication 4, caractérisé en ce qu'il est en outre prévu une série de plaquettes intercalaires supplémentaires (16) d'épaisseurs allant de 1/100 à 1/10 mm.

6. Dispositif de serrage selon l'une des revendications 4 et 5, caractérisé en ce que la longueur (c) des plaquettes intercalaires (16a à 16x) correspond à la profondeur (C) de la chambre de serrage (5) creusée dans le corps de serrage (2).

7. Dispositif de serrage selon l'une des revendications 4 à 6, caractérisé en ce que la largeur (b) des plaquettes intercalaires (16a à 16x) est supérieure à la moitié de la largeur (B) des parois de la chambre de serrage (5).

0147531

FIG. 1

7

0147531

FIG. 2

FIG. 3

FIG. 4

FIG. 5